# EUROPEAN PATENT APPLICATION

(11) **EP 4 007 417 A1**
(43) Date of publication of application: **01.06.2022**
(21) Application number: 19938585.7
(22) Date of filing: 23.07.2019
(51) Int. Cl.: H04W 72/12, H04W 48/12

(54) **TERMINAL AND WIRELESS COMMUNICATION METHOD**

(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/028875
(87) International publication number: WO 2021/014576

(57) **Abstract**

A terminal according to an aspect of the present disclosure includes: a receiving section that receives downlink control information (DCI) related to a starting position of a resource in at least one of a time domain or a frequency domain; and a control section that cancels uplink transmission using the resource on the basis of setting of granularity of the starting position and the DCI. According to one aspect of the present disclosure, cancellation of UL transmission can be appropriately performed.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

Future radio communication systems (such as 5G or NR) are expected to involve a plurality of services (also referred to as use cases, communication types, or the like) having different requirements such as higher speed and larger capacity (for example, enhanced mobile broad band (eMBB)), a massive amount of terminals (for example, massive machine type communication (mMTC) or Internet of Things (IoT)), and ultrahigh reliability and low latency (for example, ultra-reliable and low-latency communications (URLLC)).

It is also assumed that cancellation (also referred to as preemption, interruption, or the like) of scheduled uplink (UL) transmission is performed to meet communication requirements for delay reduction and/or reliability. In a case where the cancellation of the UL transmission is not appropriately performed, system performance may be deteriorated.

Thus, an object of the present disclosure is to provide a terminal and a radio communication method for appropriately performing cancellation of UL transmission.

### Solution to Problem

A terminal according to an aspect of the present disclosure includes: a receiving section that receives downlink control information (DCI) related to a starting position of a resource in at least one of a time domain or a frequency domain; and a control section that cancels uplink transmission using the resource on the basis of setting of granularity of the starting position and the DCI.

### Advantageous Effects of Invention

According to one aspect of the present disclosure, cancellation of UL transmission can be appropriately performed.

### Brief Description of Drawings

Figs. 1A to 1C are diagrams illustrating an example of a downlink (DL) preemption indication.
Fig. 2 is a diagram illustrating an example of an enhanced mobile broadband (eMBB) physical uplink shared channel (PUSCH) and an ultra-reliable and low-latency communications (URLLC) PUSCH.
Figs. 3A to 3C are diagrams illustrating an example of an uplink (UL) cancellation indication using a bitmap 1.
Figs. 4A to 4C are diagrams illustrating an example of a UL cancellation indication using a bitmap 2.
Figs. 5A to 5C are diagrams illustrating an example of a UL cancellation indication using a resource indication value (RIV).
Figs. 6A to 6C are diagrams illustrating an example of a UL cancellation indication using a start and length indicator (SLIV).
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

### (Service)

Future radio communication systems (for example, NR) are expected to involve traffic types (also referred to as services, service types, communication types, use cases, or the like) such as an enhanced mobile broadband (eMBB), machine type communications that embody multiple simultaneous connection (for example, massive machine type communications (mMTC), and Internet of Things (IoT)), and ultra-reliable and low-latency communications (URLLC). For example, it is required that the URLLC have smaller latency and higher reliability than the eMBB.

The traffic type may be identified in a physical layer on the basis of at least one of the followings.
- Logical channels with different priorities
- Modulation and coding scheme (MCS) table (MCS index table)
- Channel quality indication (CQI) table
- Downlink control information (DCI) format
- Specific radio network temporary identifier (RNTI) (for example, RNTI for URLLC or MCS-C-RNTI) used for scrambling (masking) of cyclic redundancy check (CRC) bit included in (added to) DCI (DCI format)
- Radio resource control (RRC) parameter
- Search space
- Given field in DCI (for example, newly added field or reuse of existing field)

A traffic type of a physical uplink shared channel (PUSCH) may be determined on the basis of at least one of the followings.
- MCS index table used to determine at least one of modulation order, target coding rate, or transport block size (TBS) of PUSCH (for example, whether or not to use MCS index table 3).
- RNTI used for CRC scrambling of DCI used for scheduling of PUSCH (for example, whether CRC scrambling is performed using C-RNTI or using MCS-C-RNTI)

The traffic type may be associated with communication requirements (requirements such as latency and error rate), a data type (voice, data, or the like), or the like.

URLLC requirements and eMBB requirements may be different in that the URLLC is lower in latency than the eMBB or the URLLC requirements include a reliability requirement.

### (UL Cancellation Indication)

In order to support UE-to-UE multiplexing of UL transmission (UL inter-UE multiplexing), a UL cancellation indication (indication) has been considered.

For example, the UL cancellation indication enables URLLC UL transmission of another UE by canceling eMBB UL transmission already scheduled or configured for one UE. In a case where an eMBB UE detects the UL cancellation indication, the UE cancels the UL transmission. Canceling the UL transmission may be read as preempting the UL transmission, replacing the UL transmission, or the like. The UL cancellation indication may indicate to cancel low-priority UL transmission in a case where high-priority UL transmission using a resource of the scheduled or configured low-priority UL transmission occurs.

The UL cancellation indication may interrupt UL transmission scheduled for a UE that has received the UL cancellation indication. The UL cancellation indication may also be used by a UE that has received the UL cancellation indication to notify of a resource for which the UE assumes that no transmission of the UE is intended.

In order to implement the UL cancellation indication, it is considered to support at least group common (GC)-downlink control information (DCI) (physical downlink control channel (PDCCH)) for the cancellation indication. Whether or not to support UE-specific DCI for cancellation indication has not yet been determined.

However, details of UL cancellation indication signaling related to indication of a time/frequency resource for UL cancellation have not been fully considered.

A time resource to which UL cancellation is applied may be implicitly determined. For example, the time resource may be determined according to a minimum processing time for a cancellation operation.

The time resource to which UL cancellation is applied may be explicitly indicated by the network. For example, the time resource may be indicated by the DCI, or may be indicated by radio resource control (RRC).

A frequency resource to which UL cancellation is applied may be explicitly indicated by the network. For example, the frequency resource may be indicated by the DCI, or may be indicated by the RRC.

In a case where the UL cancellation based on the GC-PDCCH is performed, the time resource to which UL cancellation is applied may be explicitly indicated by the UL cancellation DCI, or the frequency resource to which UL cancellation is applied may be explicitly indicated by the UL cancellation DCI.

It is considered that the design of the UL cancellation indication is based on a DCI format 2_1 (DL preemption indication).

UE-to-UE multiplexing of DL transmission (DL inter-UE multiplexing) uses the DL preemption indication. The preemption indication uses the DCI format 2_1 and contains a 14-bit bitmap. The DCI format 2_1 may have a CRC scrambled by an interruption (INT)-RNTI. The interpretation of the bitmap can be changed by higher layer signaling. Each bit may represent one orthogonal frequency division multiplexing (OFDM) symbol in the time domain and the entire bandwidth part (BWP) in the frequency domain, or may represent two OFDM symbols in the time domain and a half of the BWP in the frequency domain.

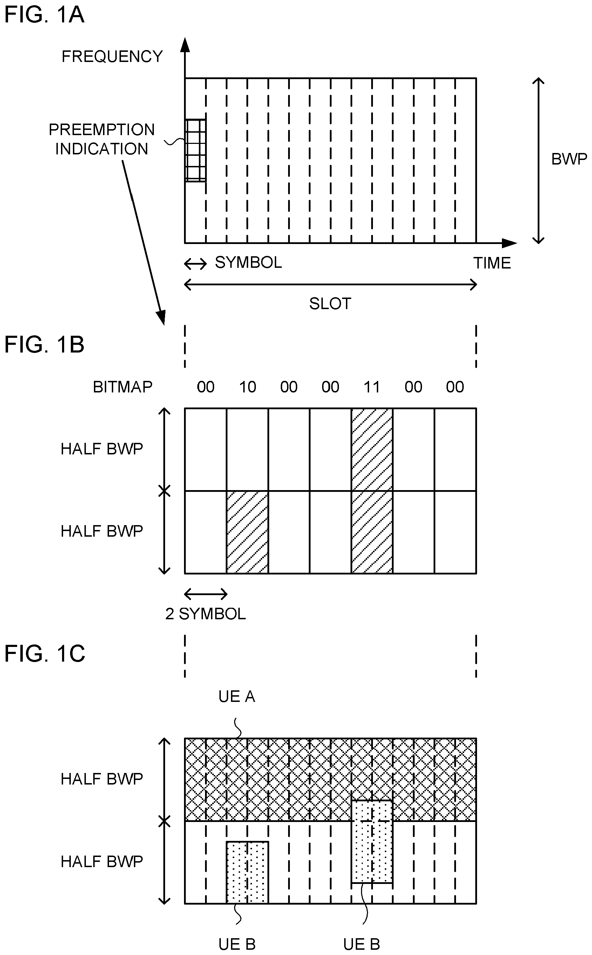

Figs. 1A to 1C are diagrams illustrating an example of the DL preemption indication. In this example, the preemption indication is transmitted to an already scheduled UE A, as illustrated in Fig. 1A. As illustrated in Fig. 1B, each bit in the preemption indication corresponds to two OFDM symbols and a half of the BWP in a particular slot after the DL preemption indication. A part corresponding to a bit of 1 indicates a resource to be preempted (used for DL transmission to a UE B). As illustrated in Fig. 1C, the second DL transmission resource of the UE B overlaps with a DL transmission resource scheduled for the UE A, and thus the second DL transmission of the UE B preempts the DL transmission scheduled for the UE A.

The DL preemption indication interrupts the DL transmission scheduled for the UE A. The DL preemption indication is also used by the UE A to notify of a resource for which the UE A assumes that no transmission of the UE A is intended.

Meanwhile, characteristics different from those of DL transmission (PDSCH transmission) have been studied for URLLC PUSCH transmission.

It has been considered that the URLLC PUSCH transmission supports mini-slot-based repetition and dynamic indication of the repetition number in the DCI. In the mini-slot-based repetition, the UE repeatedly transmits the same data (for example, a transport block (TB)) in units of a period shorter than one slot (for example, a mini slot).

The repetition number of data (for example, an aggregation factor, a repetition factor, a pusch-aggregation factor, or K) may be set by higher layer signaling.

It is considered that the URLLC PUSCH transmission supports at least inter-PUSCH-repetition frequency hopping (FH) and inter-slot FH. The inter-PUSCH-repetition FH refers to FH between PUSCHs (repetition).

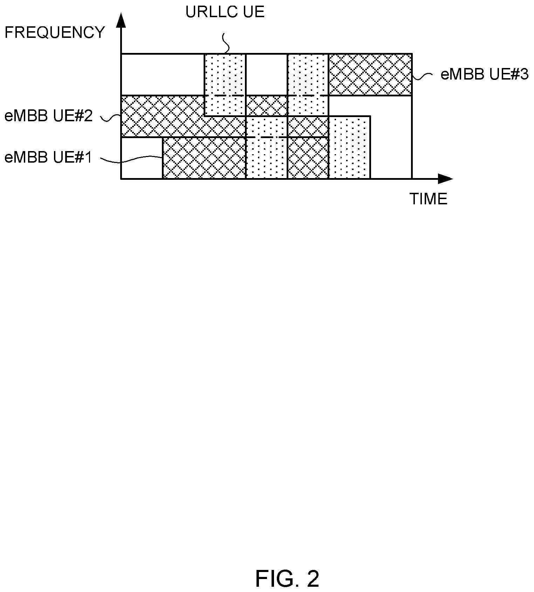

Fig. 2 is a diagram illustrating an example of an eMBB PUSCH and an URLLC PUSCH. In this example, the URLLC PUSCH transmitted by the URLLC UE uses the mini-slot-based repetition (four repetitions of a 2-symbol PUSCH) and the inter-PUSCH-repetition FH. The eMBB PUSCHs scheduled for eMBB UEs #1 and #2 overlap with the URLLC PUSCH and are thus canceled. The eMBB PUSCH scheduled for eMBB UE #3 does not overlap with the URLLC PUSCH and thus is not canceled.

For UL cancellation based on complicated UL transmission like the URLLC PUSCH, reusing DL preemption indication signaling is not efficient and accurate.

Therefore, the present inventors have conceived a method of appropriately indicating a resource for UL cancellation.

Hereinafter, embodiments according to the present disclosure will be described in detail with reference to the drawings. Radio communication methods according to the respective embodiments may be applied independently, or may be applied in combination.

### (Radio Communication Method)

For the UE, the UL cancellation resource may be indicated by the UL cancellation indication based on the GC-PDCCH (GC-PDCCH-based UL cancellation indication). In other words, the UE may receive the DCI (group common DCI) including the UL cancellation indication for the GC-PDCCH. The UE may cancel the UL transmission using the resources indicated by this DCI.

### <First Embodiment>

In the GC-PDCCH-based UL cancellation indication, the time resource to which the UL cancellation is applied may be explicitly indicated by the UL cancellation DCI. The time resource may be at least one of a slot, a mini slot, or a symbol.

For the UE, time domain resource indication granularity (time granularity) may be explicitly set (indicated) by higher layer signaling. The time resource (for example, block) indicated by the UL cancellation indication may be symbols contiguous over the time granularity.

A value (range) of the time granularity may be {1, 2, 3,..., x} symbols. The maximum value x of the time granularity may be 7, 14, the number of symbols in a half-slot, or the number of symbols in a slot. In a case where the time granularity is not set, the UE may use a default value as the time granularity. The default value may be one or two symbols.

The time granularity may be set for each of at least one of a cell, a carrier (component carrier), or a BWP.

The time resource to which the UL cancellation is applied may be indicated by any field of the next time resource indication formats 1 to 3 in the DCI.

### <<Time Resource Indication Format 1>>

The time resource indication format may be a bitmap. Each bit in the bitmap may be symbols contiguous over the time granularity.

### [Bitmap]

The bitmap may follow at least one of the following bitmaps 1 and 2.

### [[Bitmap 1]]

The bitmap may explicitly indicate only a starting symbol (starting position) of the time resource. An ending symbol of the time resource may be the last symbol in a specific period. The specific period may be a slot including the starting symbol, or may be a half-slot including the starting symbol.

### [[Bitmap 2]]

The bitmap may explicitly indicate the starting symbol (starting position) of the time resource and a duration of the time resource.

### [Bitmap Indication Method]

For the URLLC PUSCH using the mini-slot-based repetition, the bitmap may follow any of the following bitmap indication methods 1 and 2.

### [[Bitmap Indication Method 1]]

The bitmap in the UL cancellation indication may indicate the first repetition. For example, the bitmap may indicate a starting position of the first repetition. The time resource used for the remaining repetition may be derived on the basis of the repetition number and the time resource used for the first repetition. The repetition number may be indicated by another field in the UL cancellation indication.

The second and subsequent repetitions may follow the first repetition. The length of the second and subsequent repetitions may be equal to the first repetition.

### [[Bitmap Indication Method 2]]

For the URLLC PUSCH using the mini-slot-based repetition, the bitmap in the UL cancellation indication may indicate all time resources used for all repetitions.

The UL cancellation indication does not have to include the repetition number.

### <Specific Example>

### [[Specific Example of Bitmap 1]

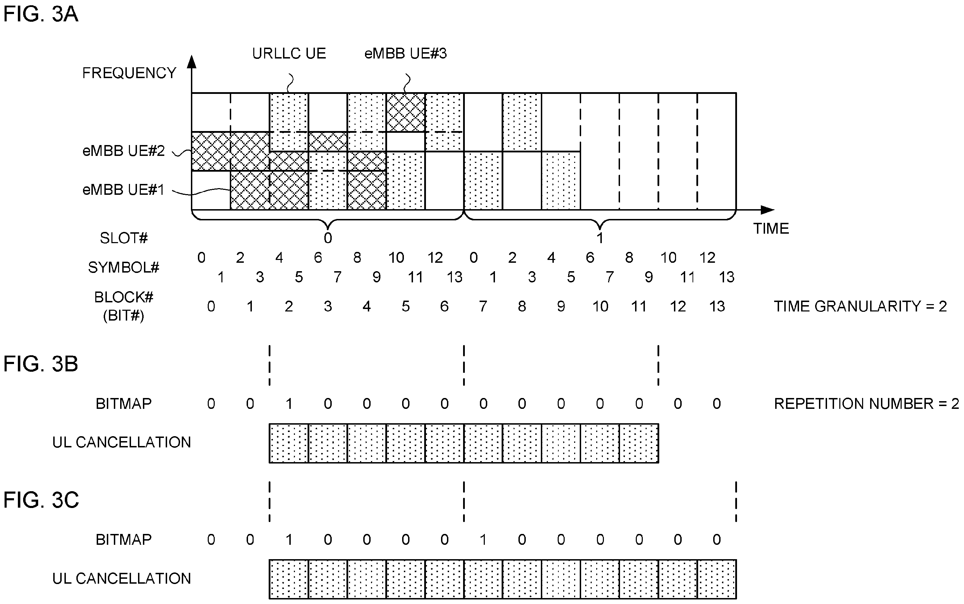

Figs. 3A to 3C are diagrams illustrating an example of the UL cancellation indication using the bitmap 1.

In the example of Fig. 3A, the URLLC UE performs (is set) eight repetitions for the URLLC 2-symbol PUSCH. This URLLC PUSCH overlaps with the PUSCH of the already scheduled eMBB UEs #1 to #3. For the eMBB UEs #1 to #3, the time granularity of two symbols is set by higher layer signaling, and the UL cancellation indication is received by using the GC-PDCCH.

In this example, the bitmap size of the UL cancellation indication is 14 bits. Since the time granularity is two symbols, each bit corresponds to a block of two symbols, and bits #0 to #13 correspond to 14 blocks (blocks #0 to #13 of 28 symbols) across slots #0 and #1.

Fig. 3B illustrates a bitmap using the bitmap indication method 1 and a time resource indicated by the bitmap. Only the bit #2 of the bitmap in the UL cancellation indication indicates 1. The repetition number in the UL cancellation indication is 2.

Therefore, the starting symbol of the first repetition of the UL cancellation is the block #2 (the symbol #4 of the slot #0), the ending symbol of the first repetition is the last symbol (the symbol #13) of the same slot #0, and the length of one repetition (the duration from the starting symbol to the ending symbol) is five blocks (10 symbols). Since the repetition number is 2, the second repetition following the first repetition is from the symbol #0 to the symbol #9 of the slot #1. In this manner, the eMBB UEs #1 to #3 determine two indicated repetitions (from the symbol #4 of the slot #0 to the symbol #9 of the slot #1) as the time resources for UL cancellation.

Fig. 3C illustrates a bitmap using the bitmap indication method 2 and a time resource indicated by the bitmap. Only the bits #2 and #7 of the bitmap in the UL cancellation indication indicate 1.

Thus, the starting symbol of the first time resource corresponding to the bit #2 is the block #2 (the symbol #4 of the slot #0) and the ending symbol corresponding thereto is the last symbol (the symbol #13) of the same slot #0. The starting symbol of the second time resource corresponding to the bit #7 is the block #7 (the symbol #0 of the slot #1), and the ending symbol corresponding thereto is the last symbol (the symbol #13) of the same slot #1. In this manner, the eMBB UEs #1 to #3 determine two indicated time resources (the symbol #4 of the slot #0 to symbol #13 of the slot #1) as the time resources for UL cancellation.

### [[Specific Example of Bitmap 2]

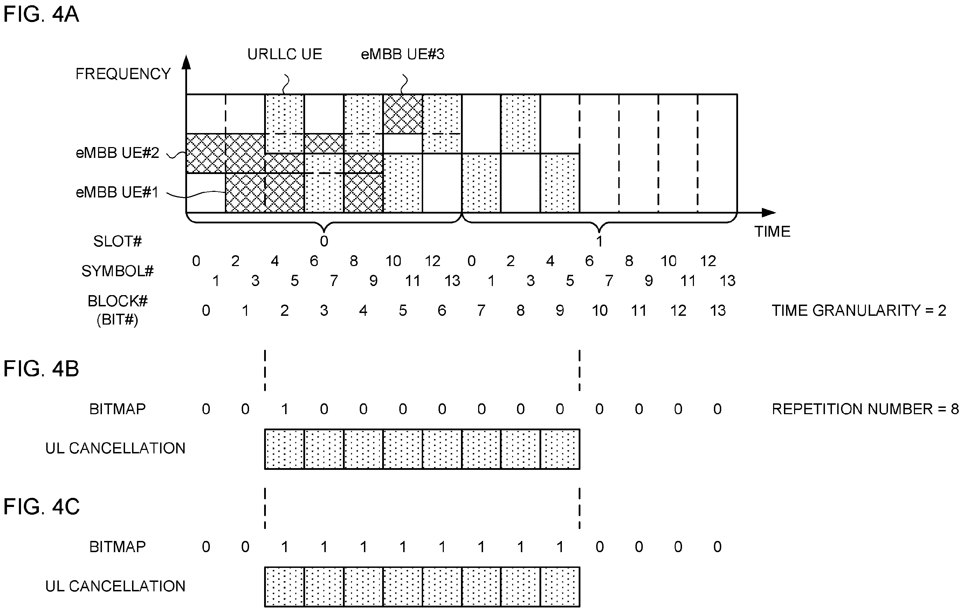

Figs. 4A to 4C are diagrams illustrating an example of the UL cancellation indication using the bitmap 2.

The example of Fig. 4A is similar to the example of Fig. 3A.

Fig. 4B illustrates a bitmap using the bitmap indication method 1 and a time resource indicated by the bitmap. Only the bit #2 of the bitmap in the UL cancellation indication indicates 1. The repetition number in the UL cancellation indication is 8.

Therefore, the starting symbol of the first repetition of the UL cancellation is the block #2 (the symbol #4 of the slot #0). The repetition number is eight blocks (16 symbols). In this manner, the eMBB UEs #1 to #3 determine eight indicated repetitions (from the symbol #4 of the slot #0 to the symbol #9 of the slot #1) as the time resources for UL cancellation.

Fig. 4C illustrates a bitmap using the bitmap indication method 2 and a time resource indicated by the bitmap. Only the bits #2 to #9 of the bitmap in the UL cancellation indication indicate 1.

Therefore, time resources for UL cancellation are the blocks #2 to #9 (the symbol #4 of the slot #0 to the symbol #9 of the slot #1). In this manner, the eMBB UEs #1 to #3 determine the indicated blocks #2 to #9 (from the symbol #4 of the slot #0 to the symbol #9 of the slot #1) as the time resources for UL cancellation.

### <<Time Resource Indication Format 2>>

The time resource indication format may be an indication similar to a resource indication value (RIV) used for indicating a frequency resource. The RIV for UL cancellation may be a value indicating the starting symbol (starting position or starting block) and the length (transmission length or the number of blocks) of at least a part of the time resource for UL cancellation.

For example, the RIV may be (maximum value of starting position × (length - 1) + starting position) when (maximum value of starting position - starting position) is equal to or greater than the length, or may be 0 when (maximum value of starting position - starting position) is less than the length.

### [RIV Indication Method]

For the URLLC PUSCH using the mini-slot-based repetition, the RIV may follow any of the following RIV indication methods 1 and 2.

### [[RIV Indication Method 1]]

The RIV in the UL cancellation indication may indicate the first repetition. For example, the RIV may indicate the starting symbol of the first repetition (starting position or starting block) and the length of the first repetition (the number of blocks). The time resource used for the remaining repetition may be derived on the basis of the repetition number and the time resource used for the first repetition. The repetition number may be indicated by another field in the UL cancellation indication.

The second and subsequent repetitions may follow the first repetition. The length of the second and subsequent repetitions may be equal to the first repetition.

### [[RIV Indication Method 2]]

For the URLLC PUSCH using the mini-slot-based repetition, the RIV in the UL cancellation indication may indicate all time resources used for all repetitions.

### <Specific Example>

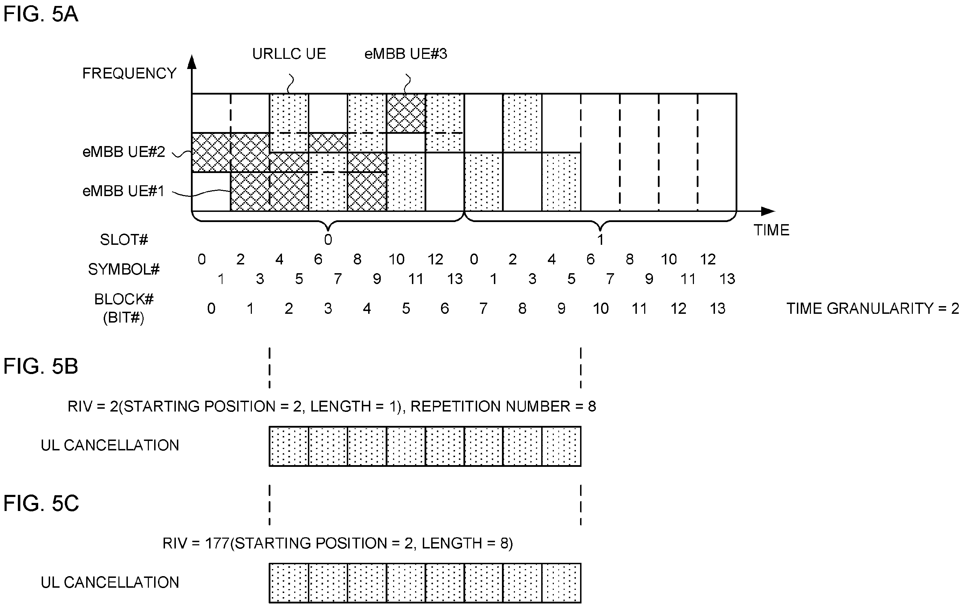

Figs. 5A to 5C are diagrams illustrating an example of the UL cancellation indication using the RIV.

The example of Fig. 5A is similar to Fig. 3A described above.

Fig. 5B illustrates an RIV using the RIV indication method 1 and a time resource indicated by the RIV. The RIV in the UL cancellation indication indicates that the starting position is 2 and the length is 1. The repetition number in the UL cancellation indication is 8.

Therefore, the starting symbol of the first repetition of the time resource for UL cancellation is the block #2 (the symbol #4 of the slot #0), the length of the first repetition is one block (two symbols), and the repetition number is eight blocks (16 symbols). In this manner, the eMBB UEs #1 to #3 determine eight indicated repetitions (from the symbol #4 of the slot #0 to the symbol #9 of the slot #1) as the time resources for UL cancellation.

Fig. 5C illustrates an RIV using the RIV indication method 2 and a time resource indicated by the RIV. In a case where the RIV in the UL cancellation indication is 2, the RIV indicates that the starting position is 2 and the length is 8.

Therefore, the starting symbol of the time resource for UL cancellation is the block #2 (the symbol #4 of the slot #0), and the length of the time resource is eight blocks (16 symbols). In this manner, the eMBB UEs #1 to #3 determine indicated time resources (the symbol #4 of the slot #0 to the symbol #9 of the slot #1) as the time resources for UL cancellation.

By using the RIV for indicating the time resource, it is possible to flexibly indicate the time resource as compared with a case of using the start and length indicator (SLIV). Compared with a case where association between the SLIV and the starting symbol and the length is set by higher layer signaling, signaling overheads can be suppressed.

### <<Time Resource Indication Format 3>>

The time resource indication format may be an indication similar to the SLIV. The SLIV for UL cancellation may reuse a time domain resource assignment field designed for the URLLC PUSCH.

The repetition number may be jointly indicated by the SLIV field or separately indicated by another field.

The time domain resource assignment field may indicate the first repetition. For example, the SLIV may indicate at least one of the starting symbol (starting position or starting block) of the first repetition, the length of the first repetition (the number of symbols or the number of blocks), a slot offset of the first repetition, or the repetition number. The time resource used for the remaining repetition may be derived on the basis of the repetition number and the time resource used for the first repetition. The slot offset may be the number of slots from the UL cancellation indication to the first repetition.

The second and subsequent repetitions may follow the first repetition. The length of the second and subsequent repetitions may be equal to the first repetition.

Association (for example, a table, a list, or a PUSCH time domain resource assignment list) of at least one of the slot offset of the first repetition, the starting position of the first repetition, the length of the first repetition, or the repetition number with the SLIV may be specified in the specification, or may be set by higher layer signaling (for example, PUSCH-TimeDomainResourceAllocationList).

In a case where the time granularity is set to 1 or no time granularity is set, the SLIV may be associated with the starting symbol number and the number of symbols corresponding to the length. In a case where the time granularity is set, for a block with symbols of the time granularity, the SLIV may be associated with the starting block number and the number of blocks corresponding to the length.

### <Specific Example>

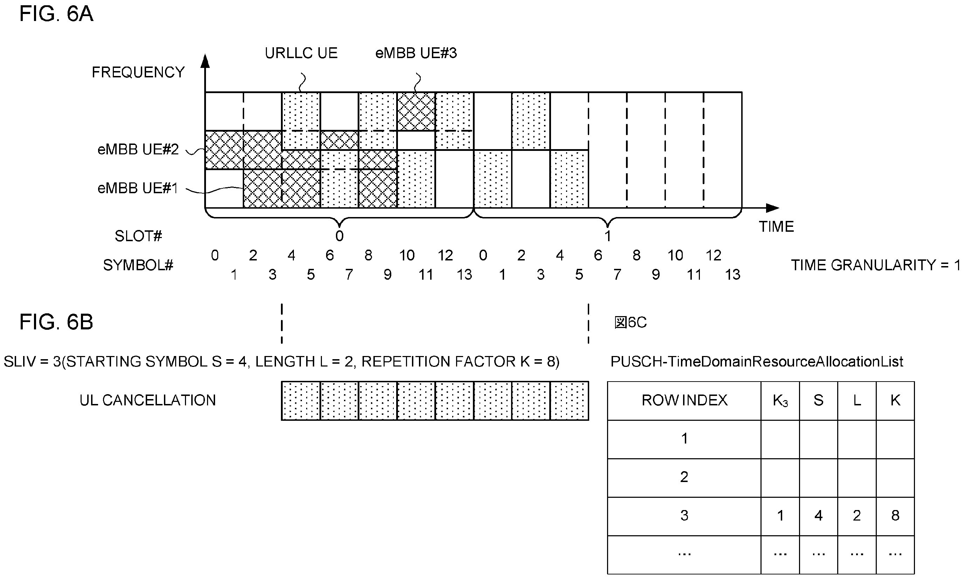

Figs. 6A to 6C are diagrams illustrating an example of the UL cancellation indication using the SLIV.

The example of Fig. 6A is similar to Fig. 3A described above. In this example, the time granularity may be 1, or the time granularity does not have to be set.

Fig. 6B illustrates a time resource for UL cancellation indicated by SLIV = 3, and Fig. 6C illustrates an example of the PUSCH time domain resource assignment list. The list in this example shows a row index corresponding to the SLIV, the slot offset of the first repetition, the starting position of the first repetition, the length of the first repetition, and the repetition number.

In a case where the SLIV in the UL cancellation indication is 3, the SLIV indicates that the slot offset is 1, the starting position S is 4, the length L is 2, and the repetition number K is 8.

Assuming that the UL cancellation indication is received in a slot immediately before the slot #0, the starting symbol of the first repetition of the time resource for UL cancellation is the symbol #4 (the symbol #4 of the slot #0), the length of the first repetition is two symbols, and the repetition number is 8 (16 symbols). In this manner, the eMBB UEs #1 to #3 determine eight indicated repetitions (from the symbol #4 of the slot #0 to the symbol #9 of the slot #1) as the time resources for UL cancellation.

In the example of Fig. 6A, in a case where the time granularity is set to 2, the SLIV may be associated with S = 2, L = 1, and K = 8.

The overhead of the UL cancellation indication can be suppressed by using the SLIV to indicate the time resource and limiting the association of the SLIV with the starting symbol and the length.

According to the embodiment, it is possible to appropriately indicate the time resource to which the UL cancellation is applied, and to suppress the overhead of signaling of the UL cancellation indication.

### <Second Embodiment>

In the GC-PDCCH-based UL cancellation indication, the frequency resource to which the UL cancellation is applied may be explicitly indicated by the UL cancellation DCI. The frequency resource may be at least one of a CC, a BWP, a half BWP, a physical resource block (PRB), or a resource element (RE).

For the UE, frequency domain resource indication granularity (frequency granularity) may be explicitly set (indicated) by higher layer signaling. The frequency resource (for example, block) indicated by the UL cancellation indication may be symbols contiguous over the frequency granularity.

A value (range) of the frequency granularity may be {1, 2, 3,..., x} PRBs. The maximum value x of the frequency granularity may be the maximum size of the BWP. In a case where the frequency granularity is not set, the UE may use a default value as the frequency granularity. The default value may be one or two PRBs.

The frequency granularity may be set for each of at least one of a cell, a carrier (component carrier), or a

### BWP.

The frequency resource to which the UL cancellation is applied may be indicated by at least one of the following frequency resource indication fields 1 and 2 in the DCI.

### <<Frequency Resource Indication Field 1>>

The frequency resource indication field 1 may reuse the frequency domain resource assignment field in the DCI format 0_0 or 0_1 for scheduling for UL cancellation indication signaling design.

The frequency domain resource assignment field indicates to the UE a set of consecutively allocated non-interleaved virtual resource blocks (VRBs) within an active carrier BWP of a size (the number of RBs) N_{BWP}^{size}.

The frequency domain resource assignment field may include RIVs corresponding to a starting VRB and the length L_{RBs} of consecutively allocated RBs. For example, in a case where (length - 1) is less than or equal to floor (N_{BWP}^{size}/2), RIV = N_{BWP}^{size}(L_{RBs} - 1) + RBₛₜₐᵣₜ; otherwise, RIV = N_{BWP}^{size} (N_{BWP}^{size} - L_{RBs} + 1) + (N_{BWP}^{size} + 1 - RBₛₜₐᵣₜ). Here, the L_{RBs} is 1 or more and does not exceed N_{BWP}^{size} - RBₛₜₐᵣₜ.

### <<Frequency Resource Indication Field 2>>

The frequency resource indication field 2 may reuse a frequency hopping flag field in the DCI format 0_0 or 0_1 for scheduling for UL cancellation indication signaling design.

According to the embodiment, it is possible to appropriately indicate the frequency resource to which the UL cancellation is applied, and to suppress the overhead of signaling of the UL cancellation indication.

### <Third Embodiment>

A new GC-PDCCH carrying the UL cancellation indication by using a DCI format 2_x may be introduced. x may be any integer.

N UL cancellation indications (UL cancellation indication 1, UL cancellation indication 2,..., UL cancellation indication j,..., and UL cancellation indication N (1 ≤ j ≤ N)) may be transmitted using the DCI format 2_x having a CRC scrambled by a specific type of RNTI. The specific type of RNTI may be a type different from the INT-RNTI, or may be the INT-RNTI. The specific type of RNTI may be referred to as a UL_INT-RNTI, a UL-INT-RNTI, a new INT-RNTI, or the like.

The UL cancellation indication j may include the following information.
- Time domain resource assignment (First Embodiment may be applied)
- Frequency domain resource assignment (Second Embodiment may be applied)
- Frequency hopping flag (Second Embodiment may be applied)
- Dynamic indication of repetition factor K (First Embodiment may be applied)

According to the embodiment, a UE group can be appropriately notified of the UL cancellation indication.

### <Others>

In each of the above-described embodiments, the UL cancellation indication may indicate a resource of non-repetitive UL transmission, or may indicate a resource of UL transmission to which the FH is not applied.

In each of the above-described embodiments, another DCI format (for example, a DCI format used for scheduling the PUSCH) may be used instead of the DCI format 0_0 or 0_1.

PUSCH repetition, a plurality of PUSCHs over slots or sub-slots or mini slots, PUSCH blind retransmission, multiple-slot PUSCH or multiple-sub-slot PUSCH or multiple-mini-slot PUSCH, a plurality of PUSCHs including the same TB, and TB repetition over a plurality of slots, a plurality of sub-slots, or a plurality of mini slots may be interchangeable. A plurality of repetitions may be one

### PUSCH.

In the present disclosure, the repetition number, the repetition factor, and K may be replaced with each other.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

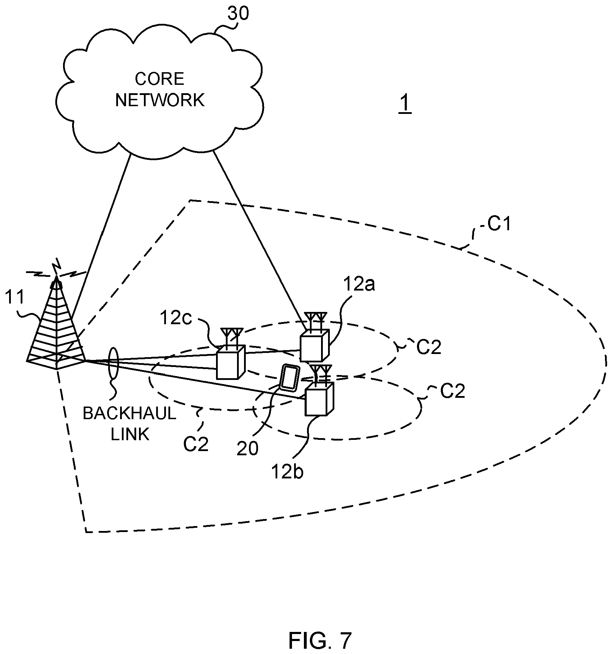

Fig. 7 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by 3rd generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) or a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

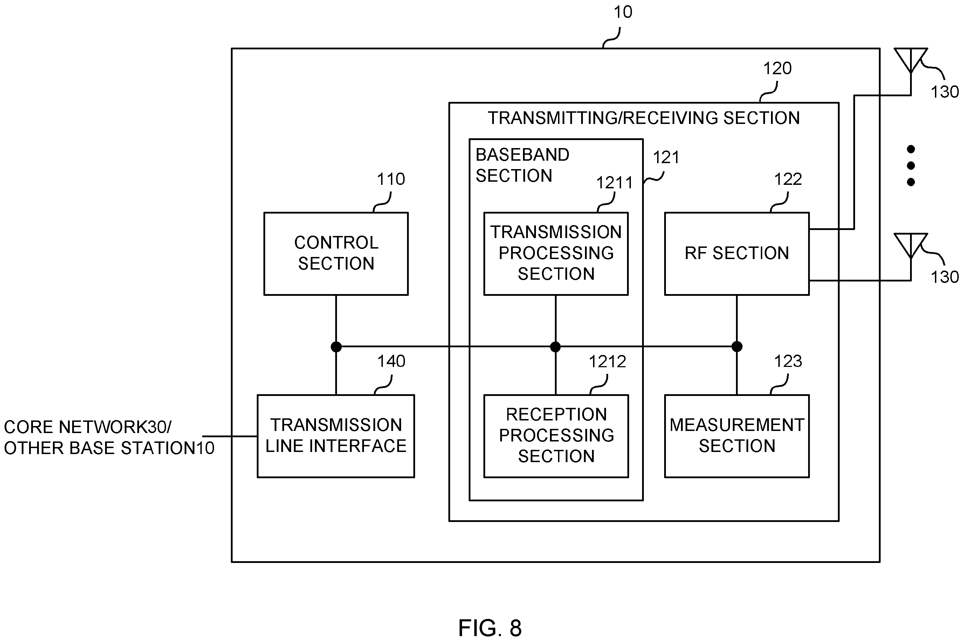

Fig. 8 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna, which is described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

Note that the control section 110 may receive a phase tracking reference signal (PTRS) for an uplink control channel (PUCCH) from the user terminal 20. The control section 110 may reduce (correct) a phase noise of the PUCCH on the basis of the PTRS.

### (User Terminal)

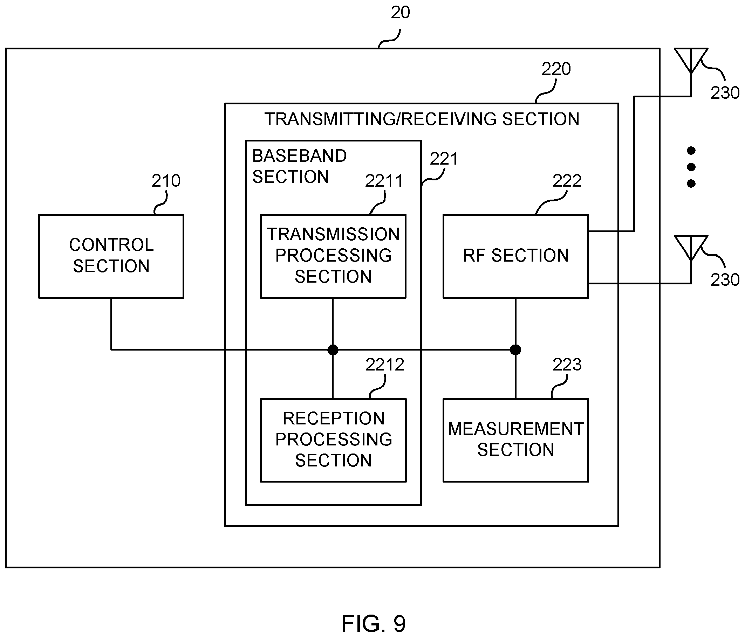

Fig. 9 is a diagram illustrating an example of a configuration of the user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive downlink control information (DCI) related to a starting position (for example, a starting block, a starting symbol, or a starting RB) of a resource in at least one of the time domain or the frequency domain. The control section 210 may, for example, cancel uplink (UL) transmission using the resource on the basis of the setting of the granularity of the starting position and the DCI.

The DCI may include at least one of fields including the time domain resource assignment, the repetition number (for example, the repetition number, the repetition factor) in the time domain, the frequency domain resource assignment, and the frequency hopping flag (First Embodiment to Third Embodiment).

The time domain resource assignment field may indicate the resource by at least one of a bitmap or a value (for example, the RIV or SLIV) based on the starting position and the length (First Embodiment).

The resource may be repeated in the time domain, and the time domain resource assignment field may indicate the resource for the first repetition (First Embodiment).

The DCI may include the cyclic redundancy check (CRC) scrambled by a different type of radio network temporary identifier (RNTI) (for example, UL_INT-RNTI) than an RNTI (for example, INT-RNTI) used for the downlink (DL) preemption indication (Third Embodiment).

The DCI may be commonly transmitted for a group of terminals (for example, the DCI may be carried by the GC-PDCCH, and the DCI may be the group-common DCI) (First Embodiment to Third Embodiment).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

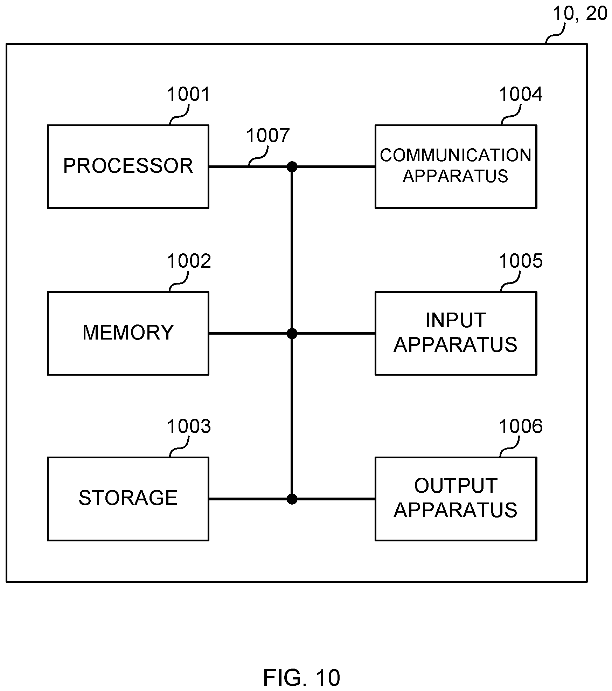

For example, the base station, the user terminal, or the like according to one embodiment of the present disclosure may function as a computer that executes the processing of the radio communication method in the present disclosure. Fig. 10 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors simultaneously or sequentially, or by using other methods. Note that the processor 1001 may be implemented by one or more chips.

Each of functions of the base station 10 and the user terminal 20 is, for example, implemented by causing given software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the entire computer by operating, for example, an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe".

Here, the TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to given values, or represented by using other corresponding information. For example, a radio resource may be specified by a given index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, chips, and the like all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals, and the like may be input and output via a plurality of network nodes.

The information, signals, and the like that are input and output may be stored in a specific location (for example, in a memory), or may be managed in a control table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling, another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Further, notification of given information (for example, notification of "being X") is not limited to explicit notification but may be performed implicitly (for example, by not performing notification of the given information or by performing notification of another piece of information).

Judging may be made in values represented by one bit (0 or 1), may be made in Boolean values that represent true or false, or may be made by comparing numerical values (for example, comparison with a given value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station or a base station subsystem that performs a communication service in this coverage.

In the present disclosure, the terms such as mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming", "expecting", "considering", and the like.

The term "maximum transmit power" described in the present disclosure may mean the maximum value of transmit power, the nominal UE maximum transmit power, or the rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Thus, the description of the present disclosure is for the purpose of explaining examples and does not bring any limiting meaning to the invention according to the present disclosure.

## Claims

1. A terminal comprising:
a receiving section that receives downlink control information (DCI) related to a starting position of a resource in at least one of a time domain or a frequency domain; and
a control section that cancels uplink transmission using the resource on a basis of setting of granularity of the starting position and the DCI.

2. The terminal according to claim 1, wherein the DCI includes at least one of fields including time domain resource assignment, a repetition number in the time domain, frequency domain resource assignment, and a frequency hopping flag.

3. The terminal according to claim 2, wherein the time domain resource assignment field indicates the resource by at least one of a bitmap or a value based on the starting position and a length.

4. The terminal according to any one of claims 1 to 3, wherein the resource is repeated in the time domain, and
the time domain resource assignment field indicates the resource for a first repetition.

5. The terminal according to any one of claims 1 to 4, wherein the DCI includes a cyclic redundancy check (CRC) scrambled by a different type of radio network temporary identifier (RNTI) than an RNTI used for downlink preemption indication.

6. A radio communication method of a terminal, comprising:
a step of receiving downlink control information (DCI) related to a starting position of a resource in at least one of a time domain or a frequency domain; and
a step of canceling uplink transmission using the resource on a basis of setting of granularity of the starting position and the DCI.
